(19) Europäisches Patentamt
European Patent Office
Office européen des brevets

(11) **EP 2 574 887 B1**

(12) **EUROPÄISCHE PATENTSCHRIFT**

(45) Veröffentlichungstag und Bekanntmachung des Hinweises auf die Patenterteilung:
**02.10.2019   Patentblatt 2019/40**

(51) Int Cl.:
**G01G 19/03** *(2006.01)*      **G01G 23/10** *(2006.01)*
**G01G 23/01** *(2006.01)*

(21) Anmeldenummer: **12182218.3**

(22) Anmeldetag: **29.08.2012**

(54) **Verfahren zum erzeugen eines TEACH-Datensatzes zum dynamischen wiegen**

Method for creating a TEACH data set for dynamic weighing

Procédé de génération d'un ensemble de données d'apprentissage pour pesage dynamique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2011   DE 102011115235**

(43) Veröffentlichungstag der Anmeldung:
**03.04.2013   Patentblatt 2013/14**

(73) Patentinhaber: **Bizerba SE & Co. KG**
**72336 Balingen (DE)**

(72) Erfinder:
• **Pfau, Helmut**
**72411 Bodelshausen (DE)**
• **Eppler, Heinz**
**72469 Meßstetten (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**WO-A1-02/084232      US-A- 5 635 679**

**Beschreibung**

Die vorliegende Erfindung betrifft ein Verfahren zum Erzeugen eines Teach-Datensatzes zur Ermittlung eines dynamischen Gewichtswerts aus einem in einem Normalbetriebsmodus einer Bandwägevorrichtung, insbesondere einer dynamischen Kontrollwaage, bei einem dynamischen Wiegen eines Artikels aufgenommenen dynamischen Gewichtsverlauf.

Grundsätzlich wird zwischen zwei verschiedenen Arten von Wiegen unterschieden, dem statischen Wiegen und dem dynamischen Wiegen. In beiden Fällen werden die zu wiegenden Artikel wie z.B. Packungen von der Bandwägevorrichtung bzw. Waage weitertransportiert. Beim statischen Wiegen wird das Wägeband der Waage zum Wiegen angehalten. Beim dynamischen Wiegen hingegen werden die Artikel im Durchlaufbetrieb gewogen, d.h. die Messungen werden vorgenommen, während sich die Artikel aufgrund einer kontinuierlichen Bewegung des Wägebands der Waage ohne Stopp über die Waage hinwegbewegen. Das dynamische Wiegen erlaubt daher ein weit höheren Durchsatz als das statische Wiegen und wird in der industriellen Fertigung deshalb bevorzugt.

Allerdings besitzt das dynamische Wiegen den Nachteil, dass das Messergebnis von der Geschwindigkeit, mit welcher die Packungen über die Bandwägevorrichtung transportiert werden, vom Gewicht der Packungen und der Länge der Packungen abhängig ist. Es ist daher in der Regel erforderlich, vor dem Normalbetrieb die Waage einzulernen, d. h. einen Teach-Datensatz zu erzeugen, mit dem dann im Normalbetrieb aus einem aufgenommenen dynamischen Gewichtsverlauf ein korrekter statischer Gewichtswert ermittelt werden kann. Hierzu werden in einem Teach-In-Vorgang üblicherweise mehrere Packungen jeweils einmal statisch und mehrmals dynamisch gewogen. Dies ist zeitaufwendig.

Darüber hinaus können beim dynamischen Wiegen - sowohl im Teach-In-Modus als auch im Normalbetriebsmodus - systematische bzw. systembedingte Fehler und/oder Störungen wie Resonanzen oder Schwingungen auftreten, die dem eigentlichen Messsignal der Waage überlagert sind. Dies führt in manchen Fällen zu einer nicht ausreichenden Messgenauigkeit.

US 5,635,679 A offenbart ein Wägeband für eine dynamische Messung. Das Gewicht eines Artikels wird im Normalbetrieb zu einem vorgegebenen Zeitpunkt bestimmt. Der Zeitpunkt wird in einem Einstellmodus dadurch bestimmt, dass ein Referenzartikel mehrfach hintereinander gewogen wird, und zwar jeweils zu mehreren verschiedenen Zeitpunkten. Zu jedem Zeitpunkt wird aus entsprechenden Messwerten eine Standardabweichung ermittelt. Der Zeitpunkt, der die geringste Standardabweichung aufweist, wird dann als der optimale Zeitpunkt zur Bestimmung des Gewichts eines Artikels im Normalbetrieb gesetzt.

Gemäß WO 02/084232 A1 wird aus einem in einem Normalbetriebsmodus aufgenommenen dynamischen Gewichtsverlaufs ein Bereich zwischen einem vierten und einem dritten Zeitpunkt bestimmt, in dem der Gewichtsverlauf flach verläuft. Hierzu wird zunächst ein erster Zeitpunkt bestimmt, an dem die ansteigende Flanke des Gewichtsverlaufs einen Wendepunkt besitzt. Basierend hierauf wird dann ein zweiter Zeitpunkt bestimmt, bei dem die abfallende Flanke des Gewichtsverlaufs eine Steigung von -50% der Steigung in dem Wendepunkt besitzt. Danach wird der dritte Zeitpunkt bestimmt, der vor dem zweiten Zeitpunkt liegen und eine Steigung von -10% der Steigung in dem Wendepunkt besitzen muss. Zuletzt wird - rückblickend von dem dritten Zeitpunkt - der Startzeitpunkt für den flachen Bereich des Gewichtsverlaufs bestimmt. Ein statischer Gewichtswert wird dann als Mittelwert der in dem ausgewählten Bereich befindlichen Messpunkte berechnet.

Der vorliegenden Anmeldung liegt die Aufgabe zugrunde, ein Verfahren der eingangs genannten Art anzugeben, welches in einer vergleichsweise kurzen Zeit durchführbar ist und eine hohe Messgenauigkeit der Bandwägevorrichtung ermöglicht.

Diese Aufgabe wird durch ein Verfahren mit den Merkmalen des Anspruchs 1 gelöst, und insbesondere dadurch, dass in einem Teach-in-Modus nacheinander mehrere, jeweils aus Einzelmesswerten bestehende dynamische Gewichtsverläufe aufgenommen werden und anhand eines Vergleichs der mehreren Gewichtsverläufe untereinander wenigstens ein Zeitfenster festgelegt wird, das entweder bestimmt, welche der Einzelmesswerte eines in dem Normalbetriebsmodus aufgenommenen dynamischen Gewichtsverlaufs der Ermittlung eines dynamischen Gewichtswerts zugrunde gelegt werden, oder umgekehrt bestimmt, welche dieser Einzelmesswerte dieser Ermittlung nicht zugrunde gelegt werden, wobei das oder die Zeitfenster in dem Teach-Datensatz hinterlegt werden.

Erfindungsgemäß werden die in dem Teach-in-Modus aufgenommenen mehreren dynamischen Gewichtsverläufe miteinander verglichen. Das jeweilige Zeitfenster kann dann beispielsweise in einen Bereich der Gewichtsverläufe gelegt werden, in dem die Gewichtsverläufe einen möglichst gleichen Verlauf bzw. ein vorgegebenes Maß an Übereinstimmung aufweisen, d.h. in dem die Einzelmesswerte der Gewichtsverläufe möglichst gut reproduzierbar sind und daher der Ermittlung eines dynamischen Gewichtswerts zugrunde gelegt werden können. Zeitbereiche, in denen die Gewichtsverläufe ein vorgegebenes Maß überschreitend voneinander abweichen bzw. in denen das Messsignal fehler- bzw. störungsbehaftet ist, werden bei der Bestimmung des dynamischen Gewichtswerts im Normalbetriebsmodus dann nicht berücksichtigt. Hierbei handelt es sich um eine positive Auswahl der Einzelmesswerte durch das Zeitfenster. Hierdurch kann die Messgenauigkeit der Bandwägevorrichtung erhöht werden.

Alternativ kann durch ein jeweiliges Zeitfenster aber auch eine negative Auswahl getroffen werden, d.h. das Zeitfenster kann in einen Bereich der Gewichtsverläufe gelegt werden, in dem die Gewichtsverläufe ein vorgegebenes Maß an Abweichung im Verlauf überschreiten bzw. ein vorgegebenes Maß an Übereinstimmung unterschreiten und/oder Verläufe aufweisen, die auf einen systematischen Fehler oder eine Störung hinweisen, beispielsweise Verläufe, die um ein bestimmtes Maß von einem konstanten Verlauf abweichen.

Insbesondere können bei der Festlegung des jeweiligen Zeitfensters der Ort und/oder die Breite des Zeitfensters festgelegt werden. Die Festlegung kann manuell oder automatisch erfolgen. Bei einem vorgegebenen Maß an Übereinstimmung bzw. Abweichung kann es sich um ein absolutes Maß oder um ein relatives Maß bezüglich anderer Abschnitte der Gewichtsverläufe handeln.

Darüber hinaus müssen aufgrund der erfindungsgemäß erreichten Genauigkeit insgesamt weniger dynamische Gewichtsverläufe als im Stand der Technik aufgenommen werden. Beispielsweise müssen für das Einlernen verwendete mehrere Packungen jeweils nur einmal, und nicht mehrmals dynamisch gewogen werden.

Insbesondere liegen die Gewichtsverläufe in digitaler Form vor und/oder es wird ein analoges Messsignal einer Wägezelle der Bandwägevorrichtung mittels eines Analog-Digital-Wandlers (ADW) in ein digitales Messsignal umgesetzt. Die Gewichtsverläufe können jeweils in einer Speichereinrichtung der Bandwägevorrichtung hinterlegt werden. Bevorzugt wird der Teach-Datensatz verschlüsselt, um eine Manipulation der Waage auszuschließen. Dem ADW kann ein Filter nachgeschaltet sein, mit welchem das Signal des ADW gefiltert wird. Die Filterstärke des Filters kann in dem Teach-Datensatz hinterlegt werden.

Die mehreren Gewichtsverläufe können auf einer Anzeigevorrichtung gleichzeitig bzw. zeitgleich und damit insbesondere über- und/oder nebeneinanderliegend graphisch dargestellt bzw. visualisiert werden, um eine manuelle Festlegung bzw. Auswahl des oder der Zeitfenster durch einen Benutzer zu ermöglichen. Bei der Anzeigeeinrichtung kann es sich um eine berührungsempfindliche Anzeigeeinrichtung, insbesondere einen Touchscreen, handeln. Auf der berührungsempfindliche Anzeigeeinrichtung können Schaltflächen zur Bedienung der Bandwägevorrichtung, insbesondere des Teach-In-Vorgangs, angezeigt werden. Grundsätzlich kann das oder die Zeitfenster auch automatisch, insbesondere durch einen entsprechenden bzw. entsprechend gewählten Algorithmus und/oder eine entsprechend ausgebildete Auswerteinheit der Bandwägevorrichtung, festgelegt werden. Der Algorithmus und/oder eine entsprechende Softwarefunktionalität sind dann insbesondere dazu ausgelegt, Ähnlichkeiten zwischen den Gewichtsverläufen zu erkennen. Eine Anzeigevorrichtung ist in diesem Fall, zumindest für diesen Zweck, nicht zwingend erforderlich.

Bevorzugt werden die mehreren Gewichtsverläufe jeweils in einer auf ein Referenzgewicht, insbesondere das Nenngewicht des Artikels und/oder das statische Gewicht des Artikels normierten Darstellung angezeigt. Hierzu ist es bevorzugt, wenn die Einzelmesswerte des jeweiligen Gewichtsverlaufs jeweils mit einem Normierungswert korrigiert werden, insbesondere wenn der Normierungswert zu den Einzelmesswerte addiert bzw. von diesen subtrahiert wird, d. h. wenn der gesamte Gewichtsverlauf um den Normierungswert zu höheren oder niedrigeren Werten hin verschoben wird. Vorzugsweise berechnet sich der jeweilige Normierungswert aus der Differenz des Referenzgewichts und des insbesondere basierend auf den in dem Zeitfenster liegenden Einzelmesswerten ermittelten dynamischen Gewichtswerts.

Bevorzugt wird das jeweilige Zeitfenster ebenfalls auf der Anzeigeeinrichtung graphisch dargestellt und den mehreren graphisch dargestellten Gewichtsverläufen überlagert. Der Beginn und das Ende des jeweiligen Zeitfensters können jeweils in Form eines verschiebbaren Markers dargestellt werden. Die Festlegung des jeweiligen Zeitfensters erfolgt insbesondere über eine graphische Bediener- bzw. Benutzeroberfläche.

Nach einer Ausführungsform der Erfindung werden die mehreren Gewichtsverläufe mit einer entsprechenden Anzahl verschiedener Exemplare desselben Artikels aufgenommen. Dies ist z.B. bei einer Kontrollwaage sinnvoll. Insbesondere bei einem Preisauszeichner können die mehreren Gewichtsverläufe jedoch auch mit verschiedenen Artikeln aufgenommen werden.

Zu den mehreren Gewichtsverläufen kann jeweils ein dynamischer Gewichtswert und aus den mehreren dynamischen Gewichtswerten ein dynamischer Mittelwert ermittelt werden, der mit einem statischen Mittelwert verglichen wird, um einen Offsetwert zu berechnen. Bevorzugt wird der statische Mittelwert aus statischen Mittelwerten ermittelt, denen dieselben Exemplare des Artikels zugrunde liegen, wie den dynamischen Gewichtsverläufen. Vorzugsweise wird auch der Offsetwert in dem Teach-Datensatz hinterlegt.

Auch das Referenzgewicht, der vorgenannte dynamische Mittelwert, der vorgenannte statische Mittelwert und/oder wenigstens ein Triggersignal können ebenfalls auf der vorgenannten Anzeigeeinrichtung graphisch dargestellt werden. Hierdurch wird der Informationsgehalt der Anzeige erhöht. Bei einem Triggersignal kann es sich um ein Signal handeln, das den Zeitpunkt anzeigt, ab dem bzw. bis zu dem ein Artikel sich vollständig auf dem Wägeband der Waage befindet, bzw. den Zeitpunkt, ab dem bzw. bis zu dem ein Einzelmesswert grundsätzlich für die Ermittlung eines dynamischen Gewichtswert in Frage kommen soll.

Nach einer anderen Ausführungsform der Erfindung werden zu verschiedenen Betriebsparametern für ein dynamisches Wiegen wie Bandgeschwindigkeit, Artikelgewicht und/oder Artikellänge und/oder zu verschiedenen Sätzen von Betriebsparametern unterschiedliche Teach-Datensätze erzeugt. Zeitfenster und/oder Offsetwerte unterschiedlicher Teach-Datensätze werden dabei in der Regel voneinander verschieden sein. Zu einem Betriebsparameter bzw. einem Betriebsparametersatz, zu dem kein Teach-Datensatz vorliegt, kann ein einem Teach-Datensatz entsprechender Datensatz durch Interpolation aus wenigstens einem der vorhandenen Teach-Datensätze erzeugt werden.

Die Erfindung betrifft weiterhin eine Bandwägevorrichtung, insbesondere eine dynamische Kontrollwaage, mit einem Teach-Datensatz zur Ermittlung eines dynamischen Gewichtswerts aus einem in einem Normalbetriebsmodus bei einem dynamischen Wiegen eines Artikels aufgenommenen dynamischen Gewichtsverlauf, wobei die Bandwägevorrichtung dazu ausgebildet ist, in einem Teach-in-Modus nacheinander mehrere, jeweils aus Einzelmesswerten bestehende dynamische Gewichtsverläufe aufzunehmen, anhand eines Vergleichs der mehreren Gewichtsverläufe untereinander wenigstens ein Zeitfenster festzulegen, das entweder bestimmt, welche der Einzelmesswerte eines in dem Normalbetriebsmodus aufgenommenen dynamischen Gewichtsverlaufs der Ermittlung eines dynamischen Gewichtswerts zugrunde gelegt werden, oder umgekehrt bestimmt, welche dieser Einzelmesswerte dieser Ermittlung nicht zugrunde gelegt werden, und das oder die Zeitfenster in dem Teach-Datensatz zu hinterlegen.

Vorteilhafte Ausführungsformen der erfindungsgemäßen Bandwägevorrichtung ergeben sich in analoger Weise aus den bevorzugten Ausgestaltungen des erfindungsgemäßen Verfahrens.

Die Erfindung wird im Folgenden beispielhaft unter Bezugnahme auf die Zeichnung beschrieben. Es zeigen:

Fig. 1    eine graphische Darstellung der Rohdaten von drei dynamischen Gewichtsverläufen, die bei einem dynamischen Wiegen von drei Exemplaren eines Artikels in einem Teach-In-Modus aufgenommenen wurden, und

Fig. 2    die Gewichtsverläufe aus Fig. 1 in einer auf das Nenngewicht des Artikels normierten Darstellung.

Beim dynamischen Wiegen von Artikeln, z.B. durch eine dynamische Kontrollwaage, wird ein Datensatz benötigt, mit dessen Hilfe aus einem in einem Normalbetriebsmodus aufgenommenen dynamischen Gewichtsverlauf ein dynamischer Gewichtswert für den jeweiligen Artikel ermittelt werden kann, aus dem dann wiederum ein statischer Gewichtswert ermittelbar ist. Der Datensatz wird in einem dem Normalbetriebsmodus vorgeschalteten Teach-In-Vorgang bzw. Teach-In-Modus erzeugt, so dass es sich bei dem Datensatz um einen Teach-Datensatz, d.h. um einen eingelernten Datensatz, handelt.

Bei dem Teach-In-Verfahren der vorliegenden Anmeldung werden zur Erzeugung des Teach-Datensatzes zunächst nacheinander mehrere Exemplare eines Artikels durch eine Bandwägevorrichtung, insbesondere eine dynamische Kontrollwaage, jeweils einmal dynamisch gewogen und die dabei gewonnenen Gewichtsverläufe aufgezeichnet, d.h. in einer Speichereinrichtung hinterlegt.

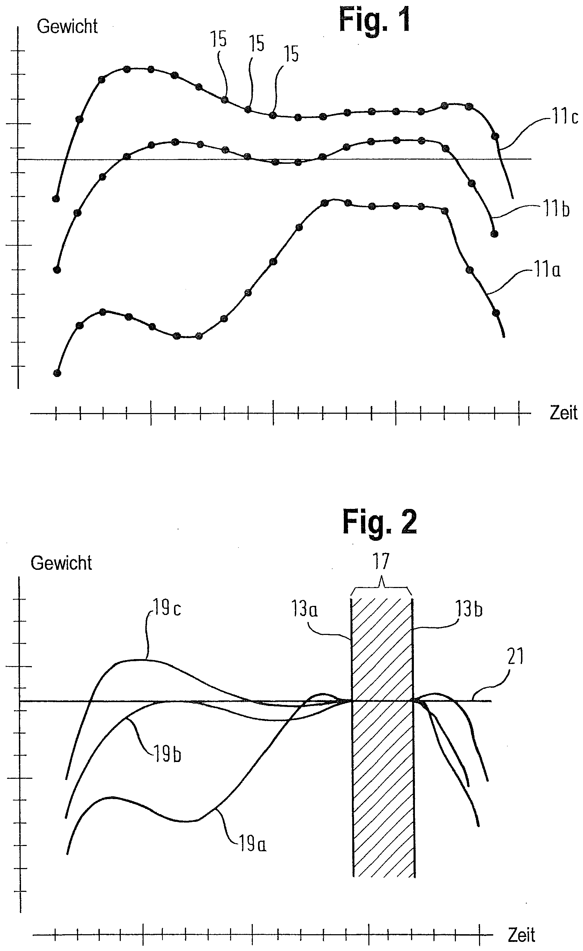

Anschließend werden die dynamischen Gewichtsverläufe, d.h. jeweils der Verlauf des aktuell gemessenen Gewichts über die Zeit, gleichzeitig, insbesondere neben- bzw. übereinander, auf einer Anzeigeeinrichtung graphisch dargestellt, wie dies in Fig. 1 für drei dynamische Gewichtsverläufe 11a, 11b, 11c beispielhaft gezeigt ist. Wie aus Fig. 1 zu erkennen ist, bestehen die Gewichtsverläufe 11a, 11b, 11c jeweils aus Einzelmesswerten 15, und sind nicht über den gesamten dargestellten Zeitbereich konstant.

Anhand eines direkten Vergleichs der dynamischen Gewichtsverläufe 11a, 11b, 11c unter- bzw. miteinander kann ein Benutzer nun feststellen, in welchem Zeitbereich die Messergebnisse der Waage besonders gut reproduzierbar sind. Eine gute Reproduzierbarkeit liegt dann vor, wenn die Gewichtsverläufe 11a, 11b, 11c einen zumindest weitgehend gleichen Verlauf aufweisen, insbesondere ein bestimmtes Maß an Übereinstimmung im Verlauf überschreiten bzw. ein bestimmtes Maß an Abweichung unterschreiten.

Dieser Bereich und/oder ein Bereich, in dem die dynamischen Gewichtsverläufe jeweils oder zumindest teilweise einen möglichst konstanten Verlauf aufweisen, kann dann als ein Zeitfenster definiert werden, derart, dass lediglich die in diesem Zeitfenster befindlichen Einzelmesswerte 15 der Gewichtsverläufe 11a, 11b, 11c der Bestimmung des dynamischen Gewichtswerts zugrunde gelegt werden. Grundsätzlich können auch mehrere derartige Zeitfenster festgelegt werden. Die nicht derart ausgewählten Zeitabschnitte hingegen werden bei der Ermittlung des dynamischen Gewichtswerts nicht berücksichtigt. Dies ist deshalb von Vorteil, da hierdurch fehler- oder störungsbehaftete Teile der dynamischen Gewichtsverläufe im Sinne einer exakteren Gewichtsbestimmung ausgeblendet werden können.

Um die Erkennung der Bereiche, in denen die dynamischen Gewichtsverläufe 11a, 11b, 11c einen gleichen oder vergleichbaren Verlauf haben, zu erleichtern, werden die Gewichtsverläufe 11a, 11b, 11c auf ein Referenzgewicht, insbesondere das Nenngewicht des zugrunde liegenden Artikels, normiert. Dies ist in Fig. 2 dargestellt, die gleichzeitig auch ein wie vorstehend erläutertes Zeitfenster 17, das den normierten Gewichtsverläufen 19a, 19b, 19c überlagert ist, und eine Linie 21 für das Nenngewicht des Artikels zeigt. Gegenüber der Darstellung in Fig. 1 sind die Gewichtsverläufe 19a, 19b, 19c derart verschoben, dass sie in dem Zeitfenster 17 mit dem Nenngewichtslinie 21 zusammenfallen.

Die Normierung eines dynamischen Gewichtsverlaufs 11a, 11b, 11c auf das Nenngewicht bedeutet, dass jeder Einzelmesswert 15 des Gewichtsverlaufs 11a, 11b, 11c um einen Normierungswert gemäß der Gleichung

$$Messwert\ (normiert) = Messwert + Normierungswert$$

verändert wird.

Der Normierungswert berechnet sich aus dem dynamischen Gewichtswert des Gewichtsverlaufs innerhalb des Zeitfensters 17 und dem Nenngewicht, d.h.

$$Normierungswert = Nenngewicht - dynamisches\ Gewicht,$$

wobei bei einem positiven bzw. negativen Normierungswert der gesamte Gewichtsverlauf um diesen Normierungswert in dem Diagramm gemäß Fig. 2 nach oben bzw. unten verschoben wird.

Das Zeitfenster 17 weist einen ersten Cursor 13a und einen zweiten Cursor 13b auf, die den Beginn und das Ende des Zeitfensters 17 bzw. Messintervalls markieren. Die beiden Cursors 13a, 13b können gemeinsam und/oder unabhängig voneinander in beiden Richtungen entlang der Zeitachse des Diagramms verschoben werden.

Zu jedem der mehreren dynamischen Gewichtsverläufe 11a, 11b, 11c wird basierend auf den in dem Zeitfenster 17 befindlichen Einzelmesswerten 15 des jeweiligen Gewichtsverlaufs 11a, 11b, 11c ein dynamischer Gewichtswert berechnet. Aus den mehreren dynamischen Gewichtswerten wird ein dynamischer Gewichtsmittelwert berechnet.

Darüber hinaus werden in dem Teach-In-Verfahren die Exemplare des Artikels, mit denen die dynamischen Gewichtsverläufe 11a, 11b, 11c aufgenommen wurden, auch jeweils einmal statisch gewogen. Aus den mehreren statischen Gewichtswerten wird ein statischer Gewichtsmittelwert berechnet.

Anschließend wird aus dem dynamischen Mittelwert dynMW und dem statischen Mittelwert statMW ein Offsetwert Offset gemäß der Gleichung

$$Offset = statMW - dynMW$$

berechnet. Der derart berechnete Offsetwert wird ebenfalls in dem Teach-Datensatz hinterlegt.

Der Offsetwert ist erforderlich, um im Normalbetriebsmodus aus einem dynamischen Gewichtswert d einen zugehörigen statischen Gewichtswert s gemäß der Gleichung

$$s = d + Offset$$

berechnen zu können.

Der dynamische Mittelwert, der statische Mittelwert, das Nenngewicht des Artikels und ein Triggersignal, das z.B. anzeigt, ab wann der jeweilige Artikel sich vollständig auf dem Wägeband der Waage befindet, können zusätzlich zu den Gewichtsverläufen 19a, 19b, 19c und dem Zeitfenster 17 auf der Anzeigeeinrichtung graphisch dargestellt werden.

Die vorliegende Erfindung ermöglicht, die Messgenauigkeit einer dynamischen Bandwägevorrichtung zu erhöhen, wobei gleichzeitig die Anzahl der für die Erzeugung eines Teach-Datensatzes erforderlichen Wägevorgänge gering gehalten werden kann.

Bezugszeichenliste

11     dynamischer Gewichtsverlauf
13     Cursor
15     Einzelmesswert
17     Zeitfenster
19     normierter dynamischer Gewichtsverlauf
21     Referenzlinie

**Patentansprüche**

1. Verfahren zum Erzeugen eines Teach-Datensatzes zur Ermittlung eines dynamischen Gewichtswerts aus einem in einem Normalbetriebsmodus einer Bandwägevorrichtung, insbesondere einer dynamischen Kontrollwaage, bei einem dynamischen Wiegen eines Artikels aufgenommenen dynamischen Gewichtsverlauf, wobei in einem Teach-in-Modus nacheinander mehrere, jeweils aus Einzelmesswerten (15) bestehende dynamische Gewichtsverläufe (11) aufgenommen werden **dadurch gekennzeichnet, dass** anhand eines Vergleichs der mehreren Gewichtsverläufe (11) untereinander wenigstens ein Zeitfenster (17) festgelegt wird, das entweder bestimmt, welche der Einzelmesswerte eines in dem Normalbetriebsmodus aufgenommenen dynamischen Gewichtsverlaufs der Ermittlung eines dynamischen Gewichtswerts zugrunde gelegt werden, oder umgekehrt bestimmt, welche dieser Einzelmesswerte dieser Ermittlung nicht zugrunde gelegt werden, wobei das oder die Zeitfenster (17) in dem Teach-Datensatz hinterlegt werden.

2. Verfahren nach Anspruch 1,
**dadurch gekennzeichnet,**
**dass** die Festlegung des jeweiligen Zeitfensters (17) derart erfolgt, dass die in dem Zeitfenster (17) liegenden Abschnitte der mehreren Gewichtsverläufe (11) ein vorgegebenes Maß an Übereinstimmung oder Abweichung im Verlauf überschreiten.

3. Verfahren nach Anspruch 1 oder 2,
**dadurch gekennzeichnet,**
**dass** die mehreren Gewichtsverläufe (11) auf einer Anzeigeeinrichtung gleichzeitig graphisch dargestellt werden.

4. Verfahren nach Anspruch 3,
**dadurch gekennzeichnet,**
**dass** die mehreren Gewichtsverläufe (11) jeweils in einer auf ein Referenzgewicht, insbesondere das Nenngewicht des Artikels normierten Darstellung (19) angezeigt werden.

5. Verfahren nach Anspruch 3 oder 4,
**dadurch gekennzeichnet,**
**dass** das jeweilige Zeitfenster (17) ebenfalls auf der Anzeigeeinrichtung graphisch dargestellt und den mehreren graphisch dargestellten Gewichtsverläufen (11) überlagert wird.

6. Verfahren nach zumindest einem der Ansprüche 3 bis 5,
**dadurch gekennzeichnet,**
**dass** der Beginn und das Ende des jeweiligen Zeitfensters (17) jeweils in Form eines verschiebbaren Markers (13) dargestellt werden.

7. Verfahren nach zumindest einem der vorstehenden Ansprüche,
**dadurch gekennzeichnet,**
**dass** die mehreren Gewichtsverläufe (11) mit einer entsprechenden Anzahl verschiedener Exemplare desselben Artikels aufgenommen werden.

8. Verfahren nach zumindest einem der vorstehenden Ansprüche,
**dadurch gekennzeichnet,**
**dass** zu den mehreren Gewichtsverläufen (11) jeweils ein dynamischer Gewichtswert und aus den mehreren dynamischen Gewichtswerten ein dynamischer Mittelwert ermittelt wird, der mit einem statischen Mittelwert verglichen wird, um einen Offsetwert zu berechnen.

9. Verfahren nach zumindest einem der vorstehenden Ansprüche,
**dadurch gekennzeichnet,**
**dass** zu verschiedenen Betriebsparametern für ein dynamisches Wiegen wie Bandgeschwindigkeit, Artikelgewicht und/oder Artikellänge und/oder zu verschiedenen Sätzen von Betriebsparametern unterschiedliche Teach-Datensätze erzeugt werden.

10. Bandwägevorrichtung, insbesondere dynamische Kontrollwaage, mit einem Teach-Datensatz zur Ermittlung eines dynamischen Gewichtswerts aus einem in einem Normalbetriebsmodus bei einem dynamischen Wiegen eines Artikels aufgenommenen dynamischen Gewichtsverlauf, wobei die Bandwägevorrichtung dazu ausgebildet ist, in einem Teach-in-Modus nacheinander mehrere, jeweils aus Einzelmesswerten (15) bestehende dynamische Gewichtsverläufe (11) aufzunehmen, **dadurch gekennzeichnet, dass** die Bandwägevorrichtung weiter dazu ausgebildet ist, anhand eines Vergleichs der mehreren Gewichtsverläufe (11) untereinander wenigstens ein Zeitfenster (17) festzulegen, das entweder bestimmt, welche der Einzelmesswerte eines in dem Normalbetriebsmodus aufgenommenen dynamischen Gewichtsverlaufs der Ermittlung eines dynamischen Gewichtswerts zugrunde gelegt werden, oder umgekehrt bestimmt, welche dieser Einzelmesswerte dieser Ermittlung nicht zugrunde gelegt werden, und das oder die Zeitfenster (17) in dem Teach-Datensatz zu hinterlegen.

**Claims**

1.  A method of generating a teach data set for determining a dynamic weight value from a dynamic weight curve recorded in a normal operating mode of a belt weighing apparatus, in particular of a dynamic checkweigher, on a dynamic weighing of an article, wherein a plurality of dynamic weight curves (11), each comprising individual measured values (15), are recorded after one another in a teach-in mode, **characterized in that** at least one time window (17) is defined based on a comparison of the plurality of weight curves (11) with one another, which time window (17) either determines which of the individual measured values of a dynamic weight curve recorded in the normal operating mode are used as a basis for the determination of a dynamic weight value or, conversely, determines which of these individual measured values are not used as a basis for said determination, with the time window or windows (17) being stored in the teach data set.

2.  A method in accordance with claim 1,
    **characterized in that**
    the definition of the respective time window (17) takes place such that the portions of the plurality of weight curves (11) which lie in the time window (17) exceed a predefined degree of agreement or deviation in the curve.

3.  A method in accordance with claim 1 or claim 2,
    **characterized in that**
    the plurality of weight curves (11) are simultaneously graphically represented on a display device.

4.  A method in accordance with claim 3,
    **characterized in that**
    the plurality of weight curves (11) are each displayed in a representation (19) normalised to a reference weight, in particular to the nominal weight of the article.

5.  A method in accordance with claim 3 or claim 4,
    **characterized in that**
    the respective time window (17) is likewise graphically represented on the display device and is superposed on the plurality of graphically represented weight curves (11).

6.  A method in accordance with at least one of the claims 3 to 5,
    **characterized in that**
    the start and the end of the respective time window (17) are each represented in the form of a displaceable marker (13).

7.  A method in accordance with at least one of the preceding claims,
    **characterized in that**
    the plurality of weight curves (11) are recorded with a corresponding number of different exemplars of the same article.

8.  A method in accordance with at least one of the preceding claims,
    **characterized in that**
    a respective dynamic weight value is determined with respect to the plurality of weight curves (11) and a mean dynamic value is determined from the plurality of dynamic weight values and is compared with a mean static value to calculate an offset value.

9.  A method in accordance with at least one of the preceding claims,
    **characterized in that**
    different teach data sets are generated with respect to different operating parameters for a dynamic weighing, such as belt speed, article weight and/or article length, and/or with respect to different sets of operating parameters.

10.  A belt weighing apparatus, in particular a dynamic checkweigher, having a teach data set for determining a dynamic weight value from a dynamic weight curve recorded in a normal operating mode on a dynamic weighing of an article, wherein the belt weighing apparatus is configured to record a plurality of dynamic weight curves (11), each comprising individual measured values (15), after one another in a teach-in mode, **characterized in that** the belt weighing apparatus is further configured to define at least one time window (17) based on a comparison of the plurality of weight curves (11) with one another, which time window (17) either determines which of the individual measured values of a dynamic weight curve recorded in the normal operating mode are used as a basis for the determination of a dynamic weight value or, conversely, determines which of these individual measured values are not used as a basis for said determination; and is configured to store the time window or windows (17) in the teach data set.

**Revendications**

1. Procédé de génération d'un ensemble de données d'apprentissage pour déterminer une valeur de poids dynamique à partir d'une courbe de poids dynamique enregistrée dans un mode de fonctionnement normal d'un dispositif de pesage à bande, en particulier d'une balance de contrôle dynamique, lors d'une pesée dynamique d'un article, dans lequel plusieurs courbes de poids dynamiques (11), constituées chacune de valeurs de mesure individuelles (15), sont enregistrées successivement dans un mode d'apprentissage,
**caractérisé en ce qu'**au moins une fenêtre temporelle (17) est définie sur la base d'une comparaison desdites plusieurs courbes de poids (11) entre elles, laquelle soit détermine lesquelles des valeurs de mesure individuelles d'une courbe de poids dynamique enregistrée dans le mode de fonctionnement normal sont prises pour base pour déterminer une valeur de poids dynamique, soit détermine inversement lesquelles de ces valeurs de mesure individuelles ne sont pas prises pour base pour cette détermination, la ou les fenêtre(s) temporelle(s) (17) étant mémorisée(s) dans l'ensemble de données d'apprentissage.

2. Procédé selon la revendication 1,
**caractérisé en ce**
**que** la fenêtre temporelle respective (17) est déterminée de telle sorte que les sections desdites plusieurs courbes de poids (11) qui se situent dans la fenêtre temporelle (17) dépassent un degré prédéfini de correspondance ou d'écart dans la courbe.

3. Procédé selon la revendication 1 ou 2,
**caractérisé en ce**
**que** lesdites plusieurs courbes de poids (11) sont simultanément représentées graphiquement sur un dispositif d'affichage.

4. Procédé selon la revendication 3,
**caractérisé en ce**
**que** lesdites plusieurs courbes de poids (11) sont affichées chacune dans une représentation (19) normalisée sur un poids de référence, en particulier le poids nominal de l'article.

5. Procédé selon la revendication 3 ou 4,
**caractérisé en ce**
**que** la fenêtre temporelle respective (17) est également représentée graphiquement sur le dispositif d'affichage et superposée auxdites plusieurs courbes de poids (11) représentées graphiquement.

6. Procédé selon au moins l'une des revendications 3 à 5,
**caractérisé en ce**
**que** le début et la fin de la fenêtre temporelle respective (17) sont représentés chacun sous la forme d'un marqueur déplaçable (13).

7. Procédé selon au moins l'une des revendications précédentes,
**caractérisé en ce**
**que** lesdites plusieurs courbes de poids (11) sont enregistrées avec un nombre correspondant d'exemplaires différents du même article.

8. Procédé selon au moins l'une des revendications précédentes,
**caractérisé en ce**
**qu'**une valeur de poids dynamique est déterminée pour chacune desdites plusieurs courbes de poids (11) et une valeur moyenne dynamique est déterminée à partir desdites plusieurs valeurs de poids dynamiques, laquelle est comparée avec une valeur moyenne statique afin de calculer une valeur de décalage.

9. Procédé selon au moins l'une des revendications précédentes,
**caractérisé en ce**
**que** différents ensembles de données d'apprentissage sont générés pour différents paramètres de fonctionnement d'un pesage dynamique, tels que vitesse de la bande, poids de l'article et/ou longueur de l'article, et/ou pour différents ensembles de paramètres de fonctionnement.

10. Dispositif de pesage à bande, en particulier balance de contrôle dynamique, comportant un ensemble de données d'apprentissage pour déterminer une valeur de poids dynamique à partir d'une courbe de poids dynamique enregistrée dans un mode de fonctionnement normal lors d'un pesage dynamique d'un article, le dispositif de pesage à bande étant conçu pour, dans un mode d'apprentissage, enregistrer successivement plusieurs courbes de poids dynamiques (11) constituées chacune de valeurs de mesure individuelles (15), **caractérisé en ce que** le dispositif de pesage à bande est en outre conçu pour définir, sur la base d'une comparaison desdites courbes de poids dynamiques (11) entre elles, au moins une fenêtre temporelle (17) qui soit détermine lesquelles des valeurs de mesure individuelles d'une courbe de poids dynamique enregistrée dans le mode de fonctionnement normal sont prises pour base pour déterminer une valeur de poids dynamique, soit détermine inversement lesquelles de ces valeurs de mesure individuelles ne sont pas prises pour base pour cette détermination, et pour enregistrer la ou les fenêtre(s) temporelle(s) (17) dans l'ensemble de données d'apprentissage.

# Fig. 1

Gewicht

15  15  15

11c

11b

11a

Zeit

# Fig. 2

Gewicht

17

19c

13a    13b

21

19b

19a

Zeit

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5635679 A
- WO 02084232 A1